# EUROPÄISCHE PATENTSCHRIFT

(11) **EP 3 589 763 B1**
(45) Veröffentlichungstag und Bekanntmachung des Hinweises auf die Patenterteilung: **14.10.2020**
(21) Anmeldenummer: 18706425.8
(22) Anmeldetag: 05.02.2018
(51) Int. Cl.: C22B 1/08, C22B 3/26, C22B 3/42, C22B 3/44, C22B 26/12, C25B 1/16, C01D 15/02

(54) **VERFAHREN ZUR HERSTELLUNG VON LITHIUMHYDROXID AUS LITHIUMHALTIGEM ERZ**
METHOD FOR PRODUCING LITHIUM HYDROXIDE FROM LITHIUM-CONTAINING ORE
PROCÉDÉ DE FABRICATION D'HYDROXYDE DE LITHIUM À PARTIR DE MINERAI DE LITHIUM

(30) Priorität: 28.02.2017 DE 102017203265; 28.11.2017 DE 102017221288
(43) Veröffentlichungstag der Anmeldung: 08.01.2020
(73) Patentinhaber: SMS Group GmbH, 40237 Düsseldorf (DE)
(72) Erfinder: BIGLARI, Mostafa, 70173 Stuttgart (DE)
(74) Vertreter: Klüppel, Walter
(86) Internationale Anmeldenummer: PCT/EP2018/052759
(87) Internationale Veröffentlichungsnummer: WO 2018/158041

(56) Entgegenhaltungen:
- US-A1- 2011 044 882
- US-A1- 2015 152 523
- BARBOSA LUCÍA I ET AL: "Extraction of lithium from [beta]-spodumene using chlorination roasting with calcium chlo", THERMOCHIMICA ACTA, Bd. 605, 12. Februar 2015 (2015-02-12), Seiten 63-67, XP029149351, ISSN: 0040-6031, DOI: 10.1016/J.TCA.2015.02.009
- CHOUBEY PANKAJ K ET AL: "Advance review on the exploitation of the prominent energy-storage element: Lithium. Part I: From mineral and brine resources", MINERALS ENGINEERING, Bd. 89, 28. Januar 2016 (2016-01-28), Seiten 119-137, XP029442016, ISSN: 0892-6875, DOI: 10.1016/J.MINENG.2016.01.010
- SWAIN BASUDEV ED - TUNG KUO-LUN ET AL: "Recovery and recycling of lithium: A review", SEPARATION AND PURIFICATION TECHNOLOGY, ELSEVIER SCIENCE, AMSTERDAM, NL, Bd. 172, 30. August 2016 (2016-08-30), Seiten 388-403, XP029755709, ISSN: 1383-5866, DOI: 10.1016/J.SEPPUR.2016.08.031
- VYAS ET AL: "Lithium extraction from indian lepidolite", RES. IND,, Bd. 20, 1. Juni 1976 (1976-06-01), Seiten 68-70, XP009505040,

## Beschreibung

Die Erfindung richtet sich auf ein Verfahren zur Herstellung von Lithiumhydroxid aus lithiumhaltigem Erz und/oder Mineral und/oder aus lithiumhaltigen Erden, insbesondere von hochreinem Lithiumhydroxid zur Verwendung in Batterien und/oder Akkumulatoren.

Bereits seit einigen Jahren lässt sich ein weltweiter Anstieg des Bedarfs an dem Leichtmetall Lithium beobachten. Lithium, bspw. in der Form von Lithiumhydroxid und Lithiumkarbonat, wird aufgrund seiner elektrochemischen Eigenschaften vor allem für Batterieanwendungen, insbesondere für wieder aufladbare Batterien und/oder Akkumulatoren, sogenannte Lithium-lonen-Batterien, verwendet. Diese finden insbesondere in transportablen elektrischen Geräten, wie Mobiltelefonen, Laptops oder ähnlichem Anwendung. Auch in der Automobilindustrie gewinnt die Lithium-Ionen-Batterie in Elektro- und Hybridfahrzeugen als Alternative oder Ergänzung zum Verbrennungsmotor zunehmend an Bedeutung. Für die Zukunft ist daher mit einem weiteren Anstieg des Bedarfs an Lithiumhydroxid und hochreinem Lithiumkarbonat zu rechnen.

Die Gewinnung von Lithium erfolgt derzeit vorwiegend aus Salzlaugen oder Solen, welche beispielsweise aus Salzseen gewonnen werden, mittels eines Absorptions-, Verdampfungs-, Ausfällungs- und/oder lonenaustauschverfahrens. Für den zukünftig anfallenden Bedarf an Lithium werden diese Quellen jedoch nicht ausreichen. In dem Artikel von MESHRAM et al., Extraction of lithium from primary and secondary sources by pre-treatment, leaching and separation, in: Hydrometallurgy 150 (Oktober 2014) 192-208 sind verschiedene natürliche Lithiumquellen und Verfahren zu dessen Gewinnung offenbart. Demnach ist die Lithiumgewinnung aus Erzen und Mineralen, wie Pegmatit, Spodumen und Petalit bzw. Tonerden, wie Hektorit, zwar aufwendiger als die Gewinnung aus Salzlaugen oder Solen, aber ebenfalls über verschiedene Verfahren, z. B. das Sulfatverfahren oder den Alkaliaufschluss, möglich. Üblicherweise erfolgt die Gewinnung von Lithiumhydroxid aus lithiumhaltigen Erzen mittels Zugabe von Sulfatsalzen oder Schwefelsäure und über die Herstellung von Lithiumkarbonat als Zwischenprodukt. Die lithiumhaltigen Erze werden zunächst geröstet bzw. kalziniert, wodurch das laugbare Lithiummineral β-Spodumen entsteht. Das β-Spodumen wird anschließend mit Schwefelsäure gelaugt, um eine wässrige Lithiumsulfatlösung zu erhalten. Durch das Hinzufügen von Kalkmilch und Natriumkarbonat werden dann schrittweise Magnesium, Eisen und Calcium aus der Lösung entfernt. Indem weiteres Natriumkarbonat der Lösung hinzugefügt wird, lassen sich bis zu 98 % des in der Lösung enthaltenen Lithiums als Lithiumkarbonat ausfällen. In einem weiteren Prozessschritt wird das erhaltene Lithiumkarbonat in Lithiumhydroxid umgewandelt.

Neuere Entwicklungen zielen auf die direkte Herstellung von Lithiumhydroxid mittels des Chloralkali-Prozesses ohne vorangehende Herstellung von Lithiumkarbonat ab. So ist z.B. aus der US 2011/0044882 ein Verfahren zur Herstellung von Lithiumhydroxid aus einer Lithiumchloridlösung bekannt. Eine lithiumhaltige Lösung, welche aus Solen oder Erzen gewonnen werden kann, wird zunächst aufkonzentriert und anschließend verschiedenen Reinigungsschritten, wie einer pH-Wert-Anpassung zur Fällung von zwei- oder dreiwertigen Ionen oder einem lonenaustausch zur Reduzierung der Gesamtkonzentration an Calcium und Magnesium unterzogen. Die aufkonzentrierte und gereinigte Lithiumchloridlösung wird einer Elektrolyse zugeführt, wobei eine semipermeable Membran für Lithiumionen durchlässig ist, sodass eine Lithiumhydroxidlösung mit Chlor und Wasserstoff als Nebenprodukten erhalten wird. Chlorgas wird an der Anode der Elektrolysevorrichtung gewonnen und Lithiumhydroxid sowie Wasserstoff an der Kathode. Der Gesamtanteil an Calcium und Magnesium in der hochreinen Lithiumhydroxidlösung beträgt weniger als 150 ppb (Anzahl Teile pro Milliarde).

Zur Herstellung der Lithiumchloridlösung wird in der AU 2013 20 18 33 B2 und in der Parallelanmeldung US 2015/152523 A1 vorgeschlagen, das im Erz enthaltene Lithium durch eine Auslaugung von β-Spodumen mit Salzsäure zu extrahieren. In einem darauffolgenden Reinigungsschritt wird die erhaltene Lösung gereinigt und aufkonzentriert, um diese anschließend der Elektrolyse zuzuführen. Die Lithium-Gewinnungsrate für die entstehende Lithiumchloridlösung beträgt bei dieser Herstellungsroute nach dem Artikel NOGUEIRA et al., Comparison of Processes for Lithium Recovery from Lepidolite by H2SO4 Digestion or HCl Leaching, Proc. Inter. Con. Min. Mater. and Metal. Eng. (2014) weniger als 84 %. Weiterhin ist in dem Artikel YAN et al., Extraction of lithium from lepidolite using chlorination roasting - water leaching process, Trans. Nonferrous Met. Soc. China 22 (2012), 1753, ein alternatives Verfahren zur Herstellung einer Lithiumchloridlösung bekannt. Gemäß dem beschriebenen Verfahren wird Lepidolith zunächst zerkleinert und zur Chlorierung mit einem Gemisch aus Natriumchlorid und Calciumchlorid versetzt. In der entstehenden Lithiumchloridlösung sind 92 % des Lithiumanteils des Erzes enthalten.

Ferner ist in BARBOSA LUCIA I et al: "Extraction of lithium from [beta]-spodumene using chlorination roasting with calcium chloride", THERMOCHIMICA ACTA, Bd. 605, (2015) eine mögliche Prozessroute zur Extraktion von Lithium aus lithiumhaltigem Erz. Dabei wird die natürlich vorkommende, alphakristalline Form des Spodumen kalziniert, um das Spodumen in seine betakristalline Form zu überführen. Dabei wird das Ausgangsmaterial mit Calciumchlorid in einem Festbettreaktor geröstet, wobei anschließend das geröstete Material mit Wasser ausgelaugt wird.

Nachteilig an dem bekannten Stand der Technik sind die hohen Kosten und die teilweise geringe Ausbeute an Lithium bzw. Lithiumhydroxid aus den lithiumhaltigen Erzen und/oder Mineralen und/oder Erden. Insbesondere bei der Fällung von Lithiumkarbonat aus einer Lithiumsulfatlösung werden hohe Mengen an Natriumkarbonat verbraucht. Natriumkarbonat unterliegt jedoch einer stark schwankenden Preisentwicklung am Markt, wodurch ein Verfahren zur Herstellung von Lithiumhydroxid über Lithiumkarbonat als Zwischenprodukt einem erhöhten Kostenrisiko unterworfen ist. In der AU 2013 20 18 33 B2 wird die Herstellung des Zwischenprodukts Lithiumkarbonat umgangen, indem Lithiumhydroxid mittels des Chloralkali-Prozesses aus einer Lithiumchloridlösung gewonnen wird. Die Lithiumchloridlösung wird durch Auslaugung von β-Spodumen mit Salzsäure erhalten. Auch bei dieser Verfahrensroute ist die Ausbeute an Lithium durch die Auslaugung mit Salzsäure vergleichsweise gering. Höhere Lithiumgewinnungsraten könnten durch längere Prozesszeiten und eine Erhöhung der Prozesstemperatur erzielt werden, was jedoch eine geringere Wirtschaftlichkeit der Verfahrensroute nach sich zieht.

Der Erfindung liegt daher die Aufgabe zugrunde, eine Lösung zu schaffen, die es ermöglicht, bei einem Verfahren zur Herstellung von Lithiumhydroxid aus lithiumhaltigem Erz und/oder Mineral und/oder lithiumhaltigen Erden die Gewinnungsrate von hochreinem Lithiumhydroxid bei der Anwendung eines Chloralkali-Prozesses zu erhöhen.

Diese Aufgabe wird erfindungsgemäß durch ein Verfahren gemäß Anspruch 1 gelöst. Bei dem erfindungsgemäßen Verfahren zur Herstellung von Lithiumhydroxid aus lithiumhaltigem Erz und/oder Mineral und/oder lithiumhaltigen Erden, insbesondere zur Herstellung von hochreinem Lithiumhydroxid zur Verwendung in Batterien und/oder Akkumulatoren, wird in einem Kalzinierungs- und Laugungsschritt eine Lithiumchloridlösung hergestellt wird, wobei die lithiumhaltigen Erze und/oder Minerale und/oder Erden zunächst unter Verwendung von einem oder mehreren Metallchloriden und/oder einem Gemisch aus Metallchloriden geröstet und anschließend, insbesondere unter Verwendung von Wasser, ausgelaugt werden. In einem nachfolgenden Reinigungsschritt wird dann eine hochreine Lithiumchloridlösung erzeugt, wobei die vorher hergestellte, noch Verunreinigungen enthaltende Lithiumchloridlösung, insbesondere durch Entfernen von Kationen wie Natrium und/oder Kalium und/oder Calcium und/oder Magnesium und/oder Eisen aus der Lithiumchloridlösung gereinigt wird. In einem nachfolgenden, insbesondere abschließenden, Elektrolyseschritt wird dann Lithiumhydroxid hergestellt, wobei die hochreine Lithiumchloridlösung einer Chlorgas und Wasserstoff als Nebenprodukte erzeugenden Membranelektrolyse unterzogen wird.

Erfindungsgemäß wird also eine direkte Herstellung von Lithiumhydroxid aus einem Erz und/oder Mineral und/oder einer Erde ohne die Herstellung von Lithiumkarbonat als Zwischenprodukt bei stark verringertem Einsatz von Chemikalien, insbesondere bei stark verringertem oder sogar ohne den Einsatz von Natriumkarbonat und/oder ohne den Einsatz von Säuren, insbesondere Salzsäure oder Schwefelsäure, gegenüber dem bekannten Stand der Technik vorgeschlagen. Hierzu wird das lithiumhaltige Erz und/oder Mineral und/oder die lithiumhaltige Erde in einem Kalzinierungs- und Laugungsschritt zunächst unter Verwendung von Metallchloriden, vorzugsweise unter Verwendung eines Gemisches aus Metallchloriden geröstet. Durch das Rösten mit Metallchloriden anstelle von Salzsäure oder anderen Chloriden wird die Gewinnungsrate und/oder die Ausbeute des in der hergestellten Lithiumchloridlösung enthaltenen Lithiums bezogen auf den Lithiumgehalt des Erzes und/oder des Minerals und/oder der Erde verbessert. Zum Auslaugen des Lithiumchlorids wird, auch im Hinblick auf den späteren Elektrolyseschritt, vorzugsweise Wasser verwendet.

In einem Reinigungsschritt wird aus der hergestellten, noch verunreinigten Lithiumchloridlösung eine hochreine Lithiumchloridlösung gewonnen. Dies bedeutet insbesondere, dass der Anteil des in der Lösung befindlichen Lithiums gegenüber anderen Ionen erhöht wird. Insbesondere werden Kationen, wie bspw. Natrium und/oder Kalium und/oder Calcium und/oder Magnesium und/oder Eisen, aus der Lithiumchloridlösung entfernt. Dies ist ebenfalls im Hinblick auf den nachfolgend durchzuführenden Elektrolyseschritt, bei welchem sich neben dem zu gewinnenden Lithium auch unerwünschte Kationen an der Kathode niederschlagen, vorteilhaft.

Die Erfindung kombiniert somit die Vorteile zweier aus dem Stand der Technik bekannter Verfahren zur Herstellung von Lithiumhydroxid, indem einzelne Verfahrensschritte eines die Gewinnung von Lithiumkarbonat als Zwischenprodukt nutzenden Herstellungsverfahrens in eine Chloralkali-Herstellungsroute übernommen werden und/oder einzelne Schritte der Chloralkali-Herstellungsroute ersetzen und/oder an diese angepasst werden.

In einer vorteilhaften Ausgestaltung zeichnet sich das erfindungsgemäße Verfahren dadurch aus, dass das eine oder die mehreren in dem Kalzinierungs- und Laugungsschritt verwendeten Metallchloride oder das Gemisch aus Metallchloriden zumindest Natriumchlorid und/oder Kaliumchlorid und/oder Lithiumchlorid und/oder Magnesiumchlorid und/oder Calciumchlorid aufweist/aufweisen. Vorzugsweise wird zum Rösten ein Gemisch aus Natriumchlorid und Calciumchlorid verwendet, da die Schmelztemperatur des Gemischs deutlich unterhalb der Schmelztemperatur der anderen Metallchloride liegt. Aufgrund der erhöhten Fluidität der bei geringerer Temperatur erhaltenen Schmelze diffundieren die Chloride leichter zur Oberfläche des lithiumhaltigen Erzes und/oder Minerals und/oder der lithiumhaltigen Erde hin, wodurch die Lithium-Extraktion verbessert wird. Im Vergleich zum Sulfatverfahren, bei welchem das lithiumhaltige Erz und/oder Mineral und/oder die lithiumhaltige Erde, insbesondere Lepidolith, geröstet und das erhaltene β-Spodumen mittels Schwefelsäure aufgeschlossen wird, weist das Rösten mit Salzen, insbesondere mit Metallchloriden, eine erhöhte Lithium-Ausbeute und verbesserte Rösteigenschaften auf. Die überschüssigen in der Lithiumchloridlösung enthaltenen Salze werden üblicherweise mit Sodaasche, d.h. mit Natriumkarbonat, entfernt. Die Auslaugung der Lösung erfolgt vorteilhaft mit Wasser, sodass aus der hergestellten Lithiumchloridlösung anschließend mittels des Chloralkali-Prozesses Lithiumhydroxid und HCl gewonnen werden kann.

Zweckmäßigerweise sollten vor dem Elektrolyseschritt in der Lithiumchloridlösung enthaltene und die Elektrolyse beeinträchtigende Kationen insbesondere Eisen und/oder Calcium und/oder Magnesium auf sehr niedrige Konzentrationen reduziert werden. In vorteilhafter Weiterbildung sieht die Erfindung daher vor, dass die Lithiumchloridlösung in dem Reinigungsschritt durch Einstellen des pH-Werts der Lithiumchloridlösung, insbesondere auf einen pH-Wert größer 8, gereinigt wird, wobei der pH-Wert vorzugsweise durch Zugabe einer, insbesondere Hydroxide und/oder Karbonate enthaltenden, Lauge und/oder alkalischen Lösung erhöht wird. Durch Erhöhung des pH-Wertes, insbesondere auf einen pH-Wert größer 8, können unerwünschte Ionen, wie Aluminium, Eisen, Magnesium und Mangan als entsprechende Hydroxide aus der Lithiumchloridlösung ausgefällt und anschließend abgeschieden werden. Eine weitere Möglichkeit bietet zum Beispiel die Oxidierung von in der Lithiumchloridlösung enthaltenem Eisen, wobei der Lithiumchloridlösung chemische Stoffe, die zur Oxidierung von Eisen geeignet sind zugegeben werden. Zweckmäßigerweise kann aus der Lithiumchloridlösung in dem Reinigungsschritt durch Zugabe von Alkalikarbonat, insbesondere Lithiumkarbonat und/oder Natriumkarbonat, Calcium entfernt werden. Die Erfindung sieht daher in weiterer Ausgestaltung vor, dass die Lithiumchloridlösung in dem Reinigungsschritt durch Zugabe von Alkalikarbonat, insbesondere Lithiumkarbonat und/oder Natriumkarbonat gereinigt wird, wobei insbesondere Calcium aus der Lithiumchloridlösung entfernt wird. Das entstandene Calciumkarbonat lässt sich aus der Lithiumchloridlösung abscheiden, wohingegen das zugegebene Lithium im Elektrolyseschritt wiedergewonnen wird.

Ferner kann die hergestellte Lithiumchloridlösung auch einem lonenaustausch, insbesondere einem Kationenaustausch zur weiteren Verringerung der in der Lithiumchloridlösung enthaltenen Kationen, unterzogen werden. Die Erfindung sieht daher auch vor, dass die Lithiumchloridlösung in dem Reinigungsschritt einem lonenaustausch, insbesondere einem Kationenaustausch, zur weiteren Verringerung der in der Lithiumchloridlösung enthaltenen Kationen unterzogen wird.

Ebenfalls zweckmäßig ist eine optionale Reinigung der Lithiumchloridlösung in dem Reinigungsschritt durch fraktionelle Kristallisation, wobei Lithium und/oder Natrium und/oder Kalium voneinander getrennt werden und das Natrium und/oder Kalium als Natriumchlorid bzw. Kaliumchlorid ausfällt, was die Erfindung in Weiterbildung vorsieht.

Auch durch Lösungsmittel-Extraktion kann die Lithiumchloridlösung weiter aufgereinigt werden. Hierbei wird das zu gewinnende Lithium von anderen Alkalisalzen, insbesondere Natriumchlorid, getrennt. Die Erfindung zeichnet sich daher weiterhin dadurch aus, dass die Lithiumchloridlösung in dem Reinigungsschritt durch Lösungsmittel-Extraktion gereinigt wird, wobei Lithium von anderen Alkalisalzen, insbesondere Natriumchlorid, getrennt wird.

Erfindungsgemäß wird während des Reinigungsschritts, insbesondere durch fraktionelle Kristallisation oder Lösungsmittel-Extraktion gewonnenes Natriumchlorid zum Rösten der lithiumhaltigen Erze und/oder Minerale und/oder Erden verwendet und dem Kalzinierungs- und Laugungsschritt zugeführt werden. In der Erfindung ist daher auch vorgesehen, dass das in dem Reinigungsschritt gewonnene Natriumchlorid in dem Kalzinierungs- und Laugungsschritt zum Rösten der lithiumhaltigen Erze und/oder Minerale und/oder der lithiumhaltigen Erden verwendet wird.

Auf diese Weise lässt sich der Bedarf an Natriumchlorid für das erfindungsgemäße Verfahren weiter senken.

Weitere, aus dem Stand der Technik bekannte Möglichkeiten zur Reinigung der Lithiumchloridlösung können alternativ oder optional zu den zuvor beschriebenen Reinigungsmöglichkeiten während des Reinigungsschritts des erfindungsgemäßen Herstellungsverfahrens angewendet werden.

Zur Erhöhung der Wirtschaftlichkeit des erfindungsgemäßen Verfahrens ist in Weiterbildung der Erfindung schließlich auch vorgesehen, dass das in dem Elektrolyseschritt erzeugte Chlorgas mit dem ebenfalls in dem Elektrolyseschritt erzeugten Wasserstoff, insbesondere mittels eines HCL-Erzeugers, zu Salzsäure rekombiniert wird. Die dadurch erzeugte Salzsäure kann als Nebenprodukt des Lithiumhydroxid-Herstellungsverfahrens entnommen werden.

Die Erfindung ist nachstehend anhand einer Zeichnung beispielhaft näher erläutert. Diese zeigt in der
- Figur: ein Verfahrensfließbild eines erfindungsgemäßen, beispielhaften Verfahrens zur Herstellung von Lithiumhydroxid aus lithiumhaltigem Erz und/oder Mineral und/oder einer lithiumhaltigen Erde.

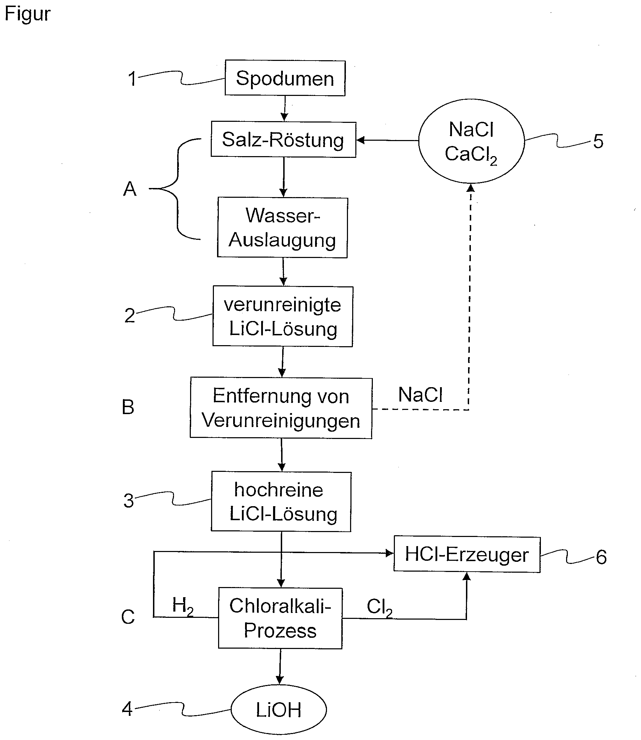

In der Figur ist ein Verfahrensfließbild eines erfindungsgemäßen, beispielhaften Verfahrens zur Herstellung von Lithiumhydroxid aus lithiumhaltigem Erz und/oder Mineral und/oder einer lithiumhaltigen Erde (1) dargestellt. Gemäß dem Ausführungsbeispiel dient das lithiumhaltige Mineral oder Erde (1) Spodumen (LiAl[Si₂O₆]) als Ausgangsprodukt zur Herstellung von Lithiumhydroxid (4), welches als Endprodukt des erfindungsgemäßen Herstellungsverfahrens zur Weiterverwendung für Batterieapplikationen, insbesondere für wiederaufladbare Lithium-Ionen-Batterien, gewonnen wird. Insbesondere kann mittels des erfindungsgemäßen Herstellungsverfahrens hochreines Lithiumhydroxid gewonnen werden, dessen Gesamtgehalt an störenden Fremdkationen, wie Calcium und Magnesium unter 150 ppb (Anzahl Teile pro Milliarde) liegt. Spodumen kommt in lithiumhaltigen Erzen (1), insbesondere in Lepodolith vor. Die Aufbereitung des lithiumhaltigen Erzes und/oder Minerals (1) zur erfindungsgemäßen Weiterverarbeitung kann in üblicher Weise durch Zerstoßen und Mahlen der Gesteinsbrocken erfolgen. Nachfolgend ist die Gesamtreaktion des erfindungsgemäßen Ausführungsbeispiels zur Herstellung von Lithiumhydroxid (4) aus dem lithiumhaltigen Mineral (1) Spodumen dargestellt:

2 LiAlSi₂O₆ + 2 H₂O + CaCl₂ → 2 LiOH + CaAl₂Si₄O₁₂

In einem Kalzinierungs- und Laugungsschritt (A) wird das lithiumhaltige Mineral (1) Spodumen zunächst bei einer Temperatur von 880°C für 30 Minuten unter Zugabe eines Gemisches aus Metallchloriden (5) geröstet. Im Ausführungsbeispiel besteht das Gemisch aus Natrium- und Calciumchlorid, da der Schmelzpunkt einer Mischung mit Lepidolith, in Abhängigkeit der jeweiligen Mischungsanteile, unterhalb des Schmelzpunktes von Mischungen mit anderen Metallchloriden liegt und so eine Extraktion des Lithiums begünstigt wird. Die Auslaugung erfolgt anschließend mit Wasser bei einer Temperatur von 90°C. Gegenüber einer Auslaugung mit Säure, beispielsweise Salzsäure oder Schwefelsäure, ist die Verwendung von Wasser ungefährlicher, kostengünstiger und vorteilhaft für einen später folgenden Chloralkali-Prozess.

Die Ausbeute, d.h. der extrahierte Anteil an Lithium zu der im Ausgangsprodukt insgesamt enthaltenen Menge an Lithium, beträgt im Ausführungsbeispiel mindestens 92%. Der Anteil überschüssiger Salze in der noch verunreinigten Lithiumchloridlösung (2) beträgt in etwa 31%. Die Ausscheidung der überschüssigen Salze kann durch Zugabe von Alkalikarbonat erfolgen, zweckmäßigerweise wird Natriumkarbonat oder alternativ Lithiumkarbonat zugegeben. Eine Ausscheidungsreaktion für Calciumchlorid durch Zugabe von Natriumkarbonat stellt sich wie folgt dar:

CaCl₂ + Na₂CO₃ → CaCO₃ + 2 NaCl

In einem Reinigungsschritt (B) wird die Lithiumchloridlösung (2) weiter aufbereitet bzw. gereinigt um eine hochreine Lithiumchloridlösung (3) zu erhalten. Eine hochreine Lithiumchloridlösung (3) zeichnet sich insbesondere durch einen sehr geringen Anteil an störenden Fremdkationen, wie Natrium, Kalium, Magnesium, Calcium und Eisen aus. Insbesondere liegt der Gesamtanteil an Magnesium und Calcium unter 150 ppb (Anzahl Teile pro Milliarde) bezogen auf die Gesamtionenmenge. Wie zuvor beschrieben, kann die Entfernung der Fremdkationen und sonstige Reinigung mittels Einstellen des pH-Wertes auf einen pH-Wert > 8 der Lithiumchloridlösung (2), durch Hinzufügen von chemischen Stoffen zur Oxidierung von Eisen, mittels Trennung durch fraktionelle Kristallisation, Trennung durch Lösungsmittel-Extraktion und/oder durch lonenaustausch erfolgen. Wird eine Trennung zwischen Lithium und Natrium oder Lithium und anderen Alkalisalzen mittels fraktioneller Kristallisation und/oder Lösungsmittel-Extraktion durchgeführt, kann dabei abgetrenntes Natriumchlorid und/oder ggf. Calciumchlorid zum Rösten des lithiumhaltigen Minerals (1) Spodumen im Kalzinierungs- und Laugungsschritt (A) verwendet werden. Auf diese Weise können im Reinigungsschritt (B) angefallene Abfallprodukte dem Kalzinierungs- und Laugungsschritt (A) zugeführt werden, um den Bedarf an für das erfindungsgemäße Herstellungsverfahren benötigten Stoffen, insbesondere Natriumchlorid und/oder ggf. Calciumchlorid, zu verringern.

Die mittels des Reinigungsschritts (B) erhaltene, hochreine Lithiumchloridlösung (3) wird zur Gewinnung von Lithiumhydroxid (4) einem Elektrolyseschritt (C) unterzogen. Mittels einer eine semipermeable Membran aufweisenden Membranelektrolysevorrichtung wird im Elektrolyseschritt (C) ein Chloralkali-Prozess durchgeführt. Eine Anode und eine Kathode der Elektrolysevorrichtung sind durch die semipermeable Membran voneinander getrennt. Durch Anlegen einer Spannung werden die in der hochreinen Lithiumchloridlösung (3) enthaltenen Ionen voneinander getrennt, wobei Lithiumhydroxid (4) als Hauptprodukt und Wasserstoff als Nebenprodukt der Elektrolyse an der Kathode gewonnen werden und Chlorgas als Nebenprodukt an der Anode gewonnen wird. Da bereits im Reinigungsschritt (B) störende Fremdkationen aus der Lithiumchloridlösung (2) entfernt wurden, um eine hochreine Lithiumchloridlösung (3) zu erhalten, kann das sich an der Kathode ansammelnde Lithiumhydroxid (4) ebenfalls hochrein, d.h. nahezu frei von störenden Kationen, entnommen werden.

Die gewonnenen Nebenprodukte, Wasserstoff und Chlorgas können mittels eines HCI-Erzeugers (6) zu Salzsäure rekombiniert werden. Durch die Herstellung eines leicht verkäuflichen Nebenprodukts, wie Salzsäure, kann die Wirtschaftlichkeit des erfindungsgemäßen Verfahrens weiter erhöht werden.

Das gewonnene, insbesondere hochreine Lithiumhydroxid, ist zur Verwendung in Batterieapplikationen, insbesondere zum Einsatz in wiederaufladbaren Lithium-Ionen-Batterien oder zur Weiterverarbeitung, bspw. zu Lithiumkarbonat, insbesondere hochreinem Lithiumkarbonat, geeignet.

### Bezugszeichenliste:

- 1: lithiumhaltige Erze und/oder Minerale und/oder Erden
- 2: Lithiumchloridlösung
- 3: hochreine Lithiumchloridlösung
- 4: Lithiumhydroxid
- 5: Metallchloride
- 6: HCI-Erzeuger
- A: Kalzinierungs- und Auslaugungsschritt
- B: Reinigungsschritt
- C: Elektrolyseschritt

## Patentansprüche

1. Verfahren zur Herstellung von Lithiumhydroxid (4), insbesondere von hochreinem Lithiumhydroxid zur Verwendung in Batterien und/oder Akkumulatoren, aus lithiumhaltigem Erz und/oder Mineral und/oder lithiumhaltigen Erden (1) mittels eines Chloralkali-Prozesses, wobei
- in einem Kalzinierungs- und Laugungsschritt (A) eine Lithiumchloridlösung (2) hergestellt wird, wobei die lithiumhaltigen Erze und/oder Minerale und/oder Erden (1) zunächst unter Verwendung von einem oder mehreren Metallchloriden (5) und/oder einem Gemisch aus Metallchloriden (5) geröstet und anschließend, insbesondere unter Verwendung von Wasser, ausgelaugt werden, wobei das eine oder die mehreren verwendeten Metallchloride (5) oder das Gemisch aus Metallchloriden (5) zumindest Natriumchlorid aufweist/aufweisen,
- wobei in einem nachfolgenden Reinigungsschritt (B) dann eine hochreine Lithiumchloridlösung (3) erzeugt wird, wobei die Lithiumchloridlösung (2), insbesondere durch Entfernen von Kationen, wie Natrium, Kalium, Calcium, Magnesium und/oder Eisen aus der Lithiumchloridlösung (2) gereinigt wird, und
- wobei in einem nachfolgenden Elektrolyseschritt (C) dann Lithiumhydroxid (4), insbesondere hochreines Lithiumhydroxid, hergestellt wird, wobei die hochreine Lithiumchloridlösung (3) einer Chlorgas und Wasserstoff als Nebenprodukte erzeugenden Membranelektrolyse unterzogen wird,
- wobei während des Reinigungsschritts (B), insbesondere durch fraktionelle Kristallisation oder Lösungsmittel-Extraktion, gewonnenes Natriumchlorid zum Rösten der lithiumhaltigen Erze und/oder Minerale und/oder Erden (1) verwendet und dem Kalzinierungs- und Laugungsschritt (A) zugeführt wird.

2. Verfahren nach Anspruch 1, **dadurch gekennzeichnet, dass** das eine oder die mehreren in dem Kalzinierungs- und Laugungsschritt (A) verwendeten Metallchloride (5) oder das Gemisch aus Metallchloriden (5) zumindest Kaliumchlorid und/oder Lithiumchlorid und/oder Magnesiumchlorid und/oder Calciumchlorid aufweist/aufweisen.

3. Verfahren nach Anspruch 1 oder 2, **dadurch gekennzeichnet, dass** die Lithiumchloridlösung (2) in dem Reinigungsschritt (B) durch Einstellen des pH-Werts, insbesondere auf einen pH-Wert größer 8, gereinigt wird, wobei der pH-Wert vorzugsweise durch Zugabe einer Hydroxide und/oder Karbonate enthaltenden Lauge und/oder einer alkalischen Lösung erhöht wird.

4. Verfahren nach einem der vorhergehenden Ansprüche, **dadurch gekennzeichnet, dass** in dem Reinigungsschritt (B) in der Lithiumchloridlösung (2) enthaltenes Eisen oxidiert wird, wobei der Lithiumchloridlösung (2) chemische Stoffe, die zur Oxidierung von Eisen geeignet sind zugegeben werden.

5. Verfahren nach einem der vorhergehenden Ansprüche, **dadurch gekennzeichnet, dass** die Lithiumchloridlösung (2) in dem Reinigungsschritt (B) durch Zugabe von Alkalikarbonat, insbesondere Lithiumkarbonat und/oder Natriumkarbonat gereinigt wird, wobei insbesondere Calcium aus der Lithiumchloridlösung (2) entfernt wird.

6. Verfahren nach einem der vorhergehenden Ansprüche, **dadurch gekennzeichnet, dass** die Lithiumchloridlösung (2) in dem Reinigungsschritt (B) einem lonenaustausch, insbesondere einem Kationenaustausch, zur weiteren Verringerung der in der Lithiumchloridlösung (2) enthaltenen Kationen unterzogen wird.

7. Verfahren nach einem der vorhergehenden Ansprüche, **dadurch gekennzeichnet, dass** die Lithiumchloridlösung (2) in dem Reinigungsschritt durch fraktionelle Kristallisation gereinigt wird, wobei Lithium und Natrium und/oder Kalium voneinander getrennt werden und das Natrium und/oder Kalium als Natriumchlorid bzw. Kaliumchlorid ausfällt.

8. Verfahren nach einem der vorhergehenden Ansprüche, **dadurch gekennzeichnet, dass** die Lithiumchloridlösung (2) in dem Reinigungsschritt (B) durch Lösungsmittel-Extraktion gereinigt wird, wobei Lithium von anderen Alkalisalzen, insbesondere Natriumchlorid, getrennt wird.

9. Verfahren nach einem der vorhergehenden Ansprüche, **dadurch gekennzeichnet, dass** das in dem Elektrolyseschritt (C) erzeugte Chlorgas mit dem in dem Elektrolyseschritt (C) erzeugten Wasserstoff, insbesondere mittels eines HCL-Erzeugers (6) zu Salzsäure rekombiniert wird.

## Claims

1. Method of producing lithium hydroxide (4), particularly highly-pure lithium hydroxide for use in batteries and/or accumulators, of ore and/or minerals with lithium content and/or earths (1) with lithium content by means of a chloralkali process, wherein
- a lithium chloride solution (2) is produced in a calcination and leaching step (A), wherein the ores and/or minerals and/or earths (1) with lithium content are initially calcined with use of one or more metal chlorides (5) and/or a mixture of metal chlorides (5) and subsequently leached out, particularly with use of water, wherein the one or more metal chlorides (5) used or the mixture of metal chlorides (5) used comprises or comprise at least sodium chloride,
- wherein in a succeeding purification step (B) a highly-pure lithium chloride solution (3) is then produced, wherein the lithium chloride solution (2) is purified particularly by removal of cations such as sodium, potassium, calcium, magnesium and/or iron from the lithium chloride solution (2) and
- wherein in a succeeding electrolysis step (C) lithium hydroxide (4), particularly highly-pure lithium hydroxide is then produced, wherein the highly-pure lithium chloride solution (3) is subjected to membrane electrolysis producing chlorine gas and hydrogen as byproducts,
- wherein during the purification step (B), sodium chloride, particularly obtained by fractional crystallisation or solvent extraction, is used for calcining the ores and/or minerals and/or earths (1) with lithium content and is fed to the calcination and leaching step (A).

2. Method according to claim 1, **characterised in that** the one or more metal chlorides (5) or the mixture of metal chlorides (5) used in the calcination and leaching step (A) comprise at least potassium chloride and/or lithium chloride and/or magnesium chloride and/or calcium chloride.

3. Method according to claim 1 or 2, **characterised in that** the lithium chloride solution (2) is purified in the purification step (B) by setting the pH value, particularly to a pH value greater than 8, wherein the pH value is preferably increased by addition of a solution and/or alkaline solution containing hydroxides and/or carbonates.

4. Method according to any one of the preceding claims, **characterised in that** iron present in the purification step (B) in the sodium chloride solution (2) is oxidised, wherein chemical substances suitable for oxidisation of iron are added to the lithium chloride solution (2).

5. Method according to any one of the preceding claims, **characterised in that** the lithium chloride solution (2) is purified in the purification step (B) by addition of alkali carbonate, particularly lithium carbonate and/or sodium carbonate, wherein, in particular, calcium is removed from the lithium chloride solution (2).

6. Method according to any one of the preceding claims, **characterised in that** the lithium chloride solution (2) is subjected in the purification step (B) to an ion exchange, particularly a cation exchange, for further reduction of the cations present in the lithium chloride solution (2).

7. Method according to any one of the preceding claims, **characterised in that** the lithium chloride solution (2) is purified in the purification step by fractional crystallisation, wherein lithium and sodium and/or potassium are separated from one another and the sodium and/or potassium precipitates as sodium chloride or potassium chloride.

8. Method according to any one of the preceding claims, **characterised in that** the lithium chloride solution (2) is purified in the purification step (B) by solvent extraction, wherein lithium is separated from other alkali salts, particularly sodium chloride.

9. Method according to any one of the preceding claims, **characterised in that** the chlorine gas produced in the electrolysis step (C) is recombined with the hydrogen produced in the electrolysis step (C), particularly by means of an HCL generator (6), to form hydrochloric acid.

## Revendications

1. Procédé destiné à la production d'hydroxyde de lithium (4), en particulier d'hydroxyde de lithium de pureté élevée, pour son utilisation dans des batteries et/ou dans des accumulateurs, à partir de minerai et/ou de matières minérales contenant du lithium et/ou de terres (1) contenant du lithium, au moyen d'un procédé de type chlore-alcali, dans lequel :
- dans une étape de calcination et de lixiviation (A), on prépare une solution de chlorure de lithium (2) ; dans lequel on soumet d'abord à un grillage les minerais et/ou les matières minérales et/ou les terres (1) contenant du lithium en utilisant un ou plusieurs chlorures métalliques (5) et/ou un mélange constitué par des chlorures métalliques (5) et ensuite, en particulier en utilisant de l'eau, on les soumet à une lixiviation ; dans lequel ledit un chlorure métallique ou lesdits plusieurs métalliques utilisés (5) ou encore le mélange constitué par des chlorures métalliques (5) présente(nt) au moins du chlorure de sodium ;
- dans lequel, dans une étape de purification (B) qui y fait suite, on obtient une solution de chlorure de lithium (3) de pureté élevée ; dans lequel on purifie la solution de chlorure de lithium (2) en particulier par élimination des cations tels que le sodium, le potassium, le calcium, le magnésium et/ou le fer, à partir de la solution de chlorure de lithium (2) ; et
- dans lequel, dans une étape d'électrolyse (C) qui y fait suite, on produit ensuite de l'hydroxyde de lithium (4), en particulier de l'hydroxyde de lithium (4) de pureté élevée; dans lequel on soumet la solution de chlorure de lithium (3) de pureté élevée à une électrolyse du type à membrane qui génère du chlore gazeux et d'hydrogène sous la forme de sous-produits ;
- dans lequel, au cours de l'étape de purification (B), on utilise le chlorure de sodium, que l'on obtient en particulier par cristallisation fractionnée ou par extraction dans un solvant, pour le grillage des minerais et/ou des matières minérales et/ou des terres (1) contenant du lithium et on l'achemine à l'étape de calcination et de lixiviation (A).

2. Procédé selon la revendication 1, **caractérisé en ce que** ledit un chlorure métallique (5) ou lesdits plusieurs chlorures métalliques ou le mélange constitué par des chlorures métalliques (5) que l'on utilise dans l'étape de calcination et de lixiviation (A) présente(nt) au moins du chlorure de potassium et/ou du chlorure de lithium et/ou du chlorure de magnésium et/ou du chlorure de calcium.

3. Procédé selon la revendication 1 ou 2, **caractérisé en ce que** l'on purifie la solution de chlorure de lithium (2) dans l'étape de purification (B) par l'intermédiaire d'un réglage de la valeur de pH, en particulier pour obtenir une valeur de pH supérieure à 8 ; dans lequel, on élève la valeur du pH de préférence par addition d'une lessive contenant des hydroxydes et/ou des carbonates et/ou d'une solution alcaline.

4. Procédé selon l'une quelconque des revendications précédentes, **caractérisé en ce que**, dans l'étape de purification (B), on oxyde le fer qui est contenu dans la solution de chlorure de lithium (2) ; dans lequel on ajoute à la solution de chlorure de lithium (2) des substances chimiques qui sont appropriées pour l'oxydation du fer.

5. Procédé selon l'une quelconque des revendications précédentes, **caractérisé en ce que** l'on purifie la solution de chlorure de lithium (2) dans l'étape de purification (B) par addition d'un carbonate de métal alcalin, en particulier du carbonate de lithium et/ou du carbonate de sodium ; dans lequel on élimine en particulier le calcium de la solution de chlorure de lithium (2).

6. Procédé selon l'une quelconque des revendications précédentes, **caractérisé en ce que** l'on soumet la solution de chlorure de lithium (2) dans l'étape de purification (B) à un échange d'ions, en particulier à un échange de cations, dans le but de réduire davantage les cations que contient la solution de chlorure de lithium (2).

7. Procédé selon l'une quelconque des revendications précédentes, **caractérisé en ce que** l'on purifie la solution de chlorure de lithium (2) dans l'étape de purification à l'intervention d'une cristallisation fractionnée; dans lequel on sépare l'un de l'autre le lithium et le sodium et/ou le potassium et on précipite le sodium et/ou le potassium sous la forme de chlorure de sodium, respectivement de chlorure de potassium.

8. Procédé selon l'une quelconque des revendications précédentes, **caractérisé en ce que** l'on purifie la solution de chlorure de lithium (2) dans l'étape de purification (B) par l'intermédiaire d'une extraction dans un solvant ; dans lequel on sépare le lithium des autres sels de métaux alcalins, en particulier du chlorure de sodium.

9. Procédé selon l'une quelconque des revendications précédentes, **caractérisé en ce que** l'on recombine le chlore gazeux que l'on a obtenu dans l'étape d'électrolyse (C) avec l'hydrogène que l'on a obtenu dans l'étape d'électrolyse (C), en particulier au moyen d'un générateur de HCl (6) pour obtenir de l'acide chlorhydrique.
